# EUROPEAN PATENT APPLICATION

(11) **EP 3 824 999 A1**
(43) Date of publication of application: **26.05.2021**
(21) Application number: 20275171.5
(22) Date of filing: 19.11.2020
(51) Int. Cl.: B01J 19/10, B02C 19/18, B01J 19/24, B01J 19/06, B01J 19/00, B01J 3/03

(54) **SWIRLING VORTEX FLOW REACTOR ASSISTED BY ULTRASOUND IRRADIATION FOR PRODUCING FINE PARTICLES**

(30) Priority: 20.11.2019 CN 201911138781
(71) Applicant: University of Nottingham Ningbo China, Ningbo, Zhejiang 315100 (CN)
(72) Inventor: YANG, Xiaogang, Ningbo, Zhejiang 315100 (CN); SHI, Weibin, Ningbo, Zhejiang 315100 (CN); GUO, Yanqing, Ningbo, Zhejiang 315100 (CN)
(74) Representative: Wilson Gunn

(57) **Abstract**

The disclosure relates to the field of chemical reactors, and in particular to a swirling vortex flow reactor assisted by ultrasound irradiation for producing fine particles. The reactor comprises a body, which is provided with a feed passage for supplying a high-speed jet to a reaction chamber, the reaction chamber configured to make the high-speed jet supplied from the feed passage to form a vortex and be used as a reaction site for producing particles, a tapering chamber configured to aggregate and break particles, and a discharge passage configured to discharge fine particles, which are in sequential communication with each other. The direction in which the jet discharges from an outlet end of the feed passage is perpendicular to a plane within which the axis of the reaction chamber lies and tangent to an inner wall of the reaction chamber. The reactor can produce fine particles in a rapid and controlled manner. Also, the reactor is simple in structure and low in energy consumption, can be operated safely, enables fast reactions, and can meet the industrial standards and requirements associated with the production of fine particulate materials.

## Description

### Technical Field

The present disclosure is related to the field of chemical reactors, and in particular to a swirling vortex flow reactor assisted by ultrasound irradiation for producing fine particles.

### Background

Fine particulate materials are widely used in various fields such as polymer composites, electronic packaging materials, fine ceramic materials, rubbers, plastics, adhesives, high grade fillers, coatings, optical fibers, conductive coatings, green domestic electrical appliances, catalytic materials, and new energy, as well as in the papermaking, precision casting, plating, pharmaceutical and medical fields. As particulate materials are fined, their crystal structure and electronic structure of the surfaces change, resulting in high chemical and thermal stability, nontoxicity, superhydrophilicity, and non-migration characteristics of the resulting fine particulate materials. Due to these characteristics, the fine particulate materials are considered to have tremendous application in many fields. As a new and important material, the fine particulate materials have recently attracted much attention.

The fine particulate materials or fine particles are typically produced by physical or chemical methods. The physical methods include mechanical grinding, vapor condensation, and ion sputtering, which may consume large amounts of energy and are not suitable for continuous production. Liquid chemical method is currently the most widely used method for producing fine particles in the laboratory and in industry. As compared with other methods, the liquid chemical method enables the production of fine particles under mild and readily controllable conditions, precise composition control of the particles, ease of addition of trace components, and low industrialization cost.

The liquid chemical method includes sol-gel methods, precipitation process, hydrothermal methods, and microemulsion methods. The sol-gel and microemulsion methods appear to be easier to produce a highly pure product, but their process conditions cannot be easily controlled and these methods are not very suitable for continuous production. The hydrothermal methods, as a method for producing inorganic materials, allow start materials to be reacted in an aqueous solution with water as a reaction medium at high temperature and pressure. However, such high temperature and pressure conditions cannot be easily controlled, and require a large amount of energy. According to the precipitation process, which is the most widely used liquid chemical method, a precipitating agent is added into a metal salt solution to carry out precipitation so as to form a precipitate, which is thermally decomposed by heating to generate a powder. This process can be performed at low cost in a simple manner, but it requires a long reaction time and provides non-uniform particle sizes.

Therefore, in view of the problems described above, it is desirable to provide a device for rapidly producing fine particulate materials, which is simple in structure and low in energy consumption, can be operated safely, enables fast reactions, and can meet the requirements of industrialization production of fine particulate materials.

### Summary

An objective of the present disclosure is to provide a swirling vortex flow reactor assisted by ultrasound irradiation for rapid and controllable production of fine particles, which is simple in structure and low in energy consumption, can be operated safely, enables fast reactions, and can meet the industrial standards and requirements associated with the production of fine particulate materials, so as to solve the above problems in the Background.

According to an aspect of the present disclosure, there is provided a swirling vortex flow reactor assisted by ultrasound irradiation for producing fine particles, comprising a body, which is provided with a feed passage for supplying a high-speed jet to a reaction chamber, the reaction chamber configured to make the high-speed jet supplied from the feed passage to form a vortex and be used as a reaction site for producing particles, a tapering chamber configured to aggregate and break particles, and a discharge passage configured to discharge fine particles, which are in sequential communication with each other. The reaction chamber and the tapering chamber each have a circular cross-section, and the axis of the reaction chamber coincides with the axis of the tapering chamber. The diameter of the tapering chamber is gradually reduced from its inlet end to its outlet end. The reaction chamber has a diameter greater than or equal to the largest diameter of the tapering chamber. The direction in which the jet discharges from an outlet end of the feed passage is perpendicular to a plane within which the axis of the reaction chamber lies and tangent to an inner wall of the reaction chamber.

Further, there may be provided two feed passages arranged symmetrically with respect to the center of the reaction chamber.

Further, the reaction chamber may have a height equal to the diameter of the feed passage.

Further, the feed passage may be a straight tube having an axis perpendicular to a plane within which the axis of the reaction chamber lies and tangent to a concentric circle which defines an inner wall of the reaction chamber. The discharge passage may also be a straight tube, and its axis coincides with the axes of the reaction chamber and of the tapering chamber. The discharge passage may have a diameter larger than that of the outlet end of the tapering chamber.

Further, the reaction chamber may be cylindrical in shape, and the tapering chamber may be a revolving body with the generatrix being an arc-shaped curved line.

Further, the inlet end of the feed passage may be provided with an inlet opening. The outlet end of the discharge passage may be provided with an outlet opening. The inlet openings and the outlet opening may be threadably attached to respective circular tubular members with a reducer.

The reactor may further comprise an upper lid, configured to sealingly connect to the body of the reactor. According to this embodiment, an upper end surface of the body may be provided with a coupling opening in communication with the reaction chamber. Edges of the coupling opening may be provided with an inner sealing groove. An outer sealing groove may be provided in the upper end surface of the body outside the inner sealing groove. Sealing rings may be provided in the inner and outer sealing grooves.

Further, the upper lid may be provided with positioning holes, and the body may be provided with threaded holes corresponding to the positioning holes. According to this embodiment, the upper lid may be fixedly connected to the body by fastening bolts inserted through the positioning holes and the threaded holes.

Further, the side of the lid facing the reaction chamber may be provided with a coupling end, the diameter of which is matched with that of the coupling opening of the body. In use, the coupling end may be connected to an ultrasonic generator.

Alternatively, the upper lid may be connected to the body by ultrasonic welding.

The reactor of the present disclosure can provide several advantages. It allows two fast liquid jets to be mixed with each other such that a swirl flow is generated. Since the swirl flow can result in intensive mixing and enhanced mass transfer from phase to phase, a rapid reaction can take place in the liquid without constraint by the mass transfer. In this way, high reaction efficiency is achieved. The reactor is small in size, but enables mass production of fine particles. Moreover, the reactor has a simple structure, can be manufactured at a low cost, and consumes less energy. Further, bolted connection between the lid and the body facilitates cleaning and maintenance. In particular, in use, a reactant solution mixture is fed into the reaction chamber through the feed passages, and forms a "Rankine vortex-like" flow under the influence of the geometry of the reaction chamber. Such vortex flow can provide intensive macromixing and micromixing, and thus facilitate a rapid chemical reaction. In the case that the lid is connected to an ultrasonic generator, strong uniform shear fields created by the vortex flow in the chamber can further increase turbulent intensity of the flow under the action of ultrasonic waves. Especially, ultrasonic cavitation can enhance the mass transfer from phase to phase at the micro level, effectively suppressing further growth of the product particles and allowing a large number of fine crystal nuclei to be generated. The gradually reduced diameter of the tapering chamber enables the pressure within the chamber to be increased as the diameter of the chamber decreases. So, the force for driving the fluid can be increased, and the speed of the fluid at the inlet can be further increased. Products produced at this point are still under the control of the fluid field, enabling small and large particles to be aggregated and broken down, respectively, and providing a more uniform particle size distribution. Moreover, rotation of the fluid in the fluid field can lead to a locally increased turbulent kinetic energy and a locally increased shearing stress, generating a significant amount of turbulent eddies. The turbulent eddies having a size similar to the solid particles produce a strong shearing action on primary crystallites, which can facilitate passivation and stabilization of the solid surfaces. The reactor enables the reaction process, especially the precipitation process, to proceed more rapidly, so as to produce a fine powder material with regular topographies, smaller particle sizes, and a narrow particle size distribution.

### Brief Description of the Drawings

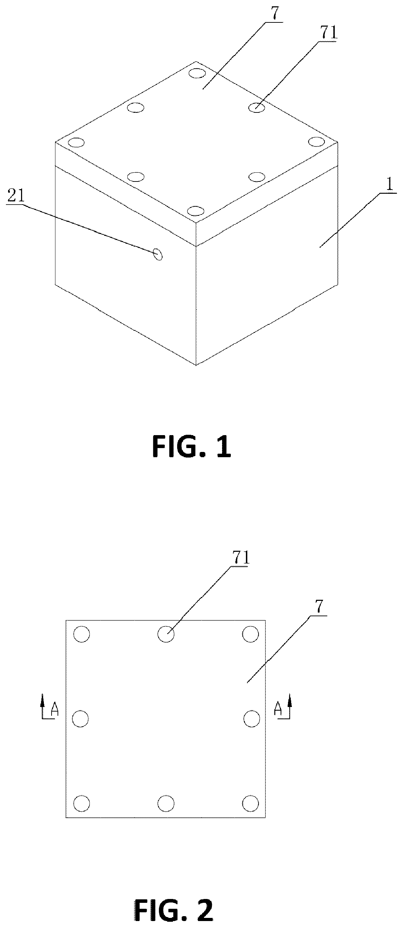

FIG. 1 is a schematic perspective view showing a configuration of a swirling vortex flow reactor assisted by ultrasound irradiation for producing fine particles, according to an embodiment of the present disclosure;
FIG. 2 is a top view of the reactor of FIG. 1;

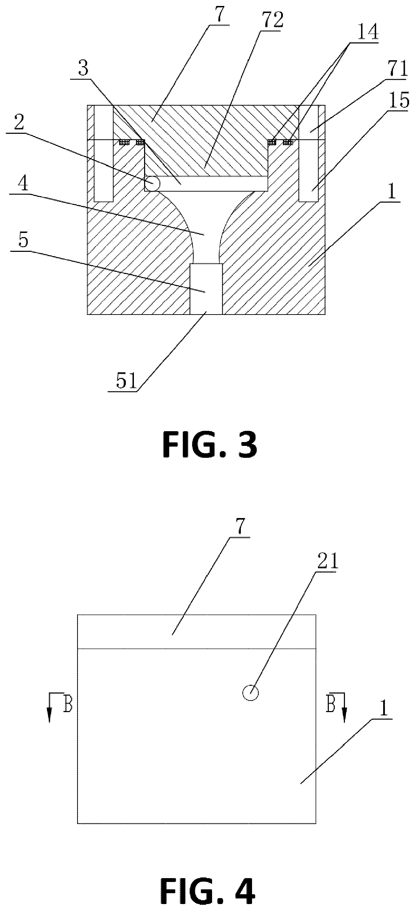

FIG. 3 is a sectional view taken along a line A-A in FIG. 2;
FIG. 4 is a front view of the reactor of FIG. 1;

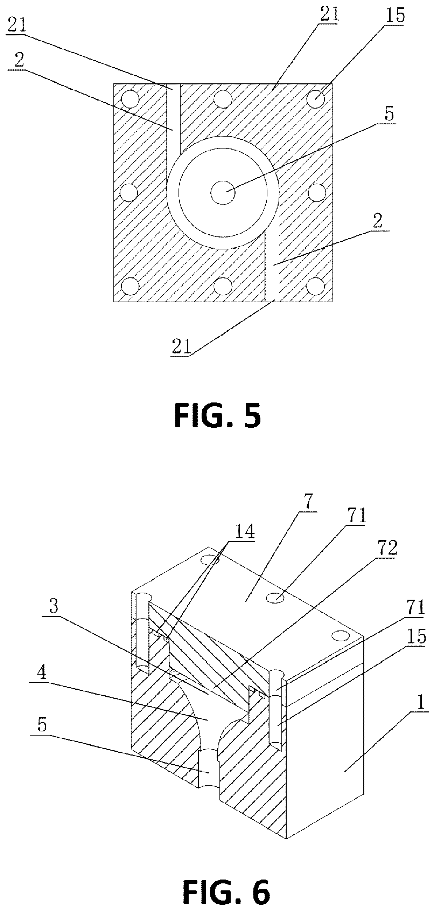

FIG. 5 is a sectional view taken along a line B-B in FIG. 4;
FIG. 6 is a perspective view of the reactor of FIG. 1 cut in half;

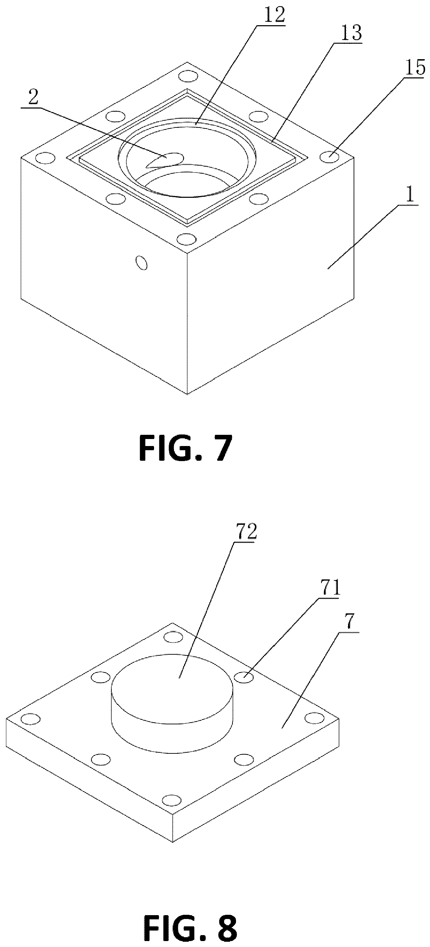

FIG. 7 is a schematic perspective view showing a body of the reactor;
FIG. 8 is a schematic perspective view showing an upper lid of the reactor; and
FIG. 9 is a schematic perspective view of the reactor, showing tubular members attached to inlet openings of feed passages of the body and an outlet opening of a discharge passage thereof.

### Detailed Description

The present disclosure will now be further described in greater detail by reference to the following examplary embodiments.

As shown in the figures, a swirling vortex flow reactor assisted by ultrasound irradiation for producing fine particles according to an embodiment of the disclosure includes a body 1. The body 1 is provided with a feed passage 2 for supplying a high-speed jet to a reaction chamber 3, the reaction chamber 3 configured to make the high-speed jet supplied from the feed passage 2 to form a vortex and be used as a reaction site for producing particles, a tapering chamber 4 configured to aggregate and break particles, and a discharge passage 5 configured to discharge fine particles, which are in sequential communication with each other. In practice, a reactant solution mixture flow sequentially through the feed passage 2, the reaction chamber 3, the tapering chamber 4, and the discharge passage 5.

According to this embodiment, the reaction chamber 3 and the tapering chamber 4 each have a circular cross-section, and the axis of the reaction chamber 3 coincides with the axis of the tapering chamber 4. The diameter of the tapering chamber 4 is gradually reduced from its inlet end to its outlet end. The reaction chamber 3 has a diameter greater than or equal to the largest diameter of the tapering chamber 4. Preferably, the reaction chamber 3 is cylindrical in shape, and the tapering chamber 4 is a revolving body with the generatrix being an arc-shaped curved line.

According to the embodiment, the direction in which the jet discharges from an outlet end of the feed passage 2 is perpendicular to a plane within which the axis of the reaction chamber 3 lies and tangent to an inner wall of the reaction chamber 3. Preferably, the feed passage 2 is a straight tube having an axis perpendicular to a plane within which the axis of the reaction chamber 3 lies and tangent to a concentric circle which defines an inner wall of the reaction chamber 3. Preferably, the discharge passage 5 is a straight tube, and its axis coincides with the axes of the reaction chamber 3 and of the tapering chamber 4. The discharge passage 5 has a diameter larger than that of the outlet end of the tapering chamber 4.

In the embodiment shown in the figures, there are provided two feed passages 2, which are arranged symmetrically with respect to the center of the reaction chamber 3. In other embodiments, the number of the feed passages 2 may be an integer number greater than 2. In such cases, the feed passages 2 are arranged substantially at equal angular intervals along the circumferential direction of the reaction chamber 3.

Preferably, the reaction chamber 3 has a height equal to the diameter of the feed passage 2.

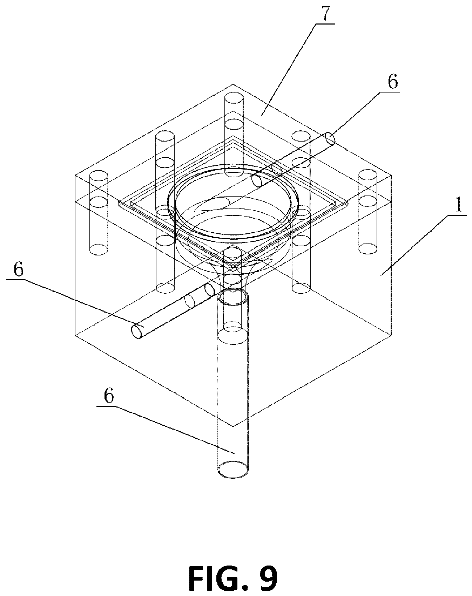

The inlet end of the feed passage 2 is provided with an inlet opening 21. The outlet end of the discharge passage 5 is provided with an outlet opening 51. The inlet openings 21 and the outlet opening 51 may be threadably attached to respective circular tubular members 6 with a reducer, as shown in Fig. 9. In particular, the inlet openings 21 and the outlet opening 51 each may be provided with internal threads (not shown), and the circular tubular members 6 may be provided with external threads (not shown) which mate with the corresponding internal threads of the inlet openings 21 and the outlet opening 51. The reducer may be a thread reducer.

The reactor further includes an upper lid 7 sealingly connected to the body 1 of the reactor. A surface of the body 1, where the body 1 and the upper lid 7 contact each other, is provided with sealing grooves and sealing rings 14. The body 1 is also provided with a coupling opening 11 in its upper end surface, which is in communication with the reaction chamber 3. In the embodiment shown in the figures, the coupling opening 11 has an inner sealing groove 12 at an edge thereof. An outer sealing groove 13 is provided in the upper end surface of the body 1 outside the inner sealing groove 12. The sealing rings 14 are respectively disposed within the inner and outer sealing grooves 12, 13. The inner sealing ring 14 and the inner sealing groove 12 each have a round top-view shape. The outer sealing ring 14 and the outer sealing groove 13 each have a square top-view shape. However, in other embodiments, the number and shape of the sealing groove and ring may be varied. For example, the number of the sealing grooves and rings may each be one or more than two. The sealing grooves and rings may be of any other suitable shape that is compatible to the shape of the body 1.

In the embodiment, the upper lid 7 is provided with positioning holes 71. The body 1 is provided with threaded holes 15 corresponding to the positioning holes 71. The upper lid 7 may be fixedly connected to the body 1 by fastening bolts inserted through the positioning holes 71 and the threaded holes 15. The threads of the threaded holes 15 and the fastening bolts are not shown in the figures. In the embodiment shown in the figures, there are provided eight positioning holes 71 and eight threaded holes 15. When the coupling opening 11 of the body 1 is closed by the upper lid 7, it presents a rectangular shape in plane. The positioning holes 71 and the threaded holes 15 are disposed at four corners of the lid 7 and of the upper end surface of the body 1 and at midpoints, located between the corners, of edges of the lid 7 and of edges of the upper end surface of the body 1, respectively. However, in other embodiments, there may be any other suitable number of positioning holes 71 and threaded holes 15. Alternatively, in other embodiments, the upper lid 7 may be fixedly connected to the body 1 by means of ultrasonic welding or combination of welding and bolting. Means for connecting the lid 7 to the body 1 include, but are not limited to, those as described above.

The side of the lid 7 facing the reaction chamber 3 may be provided with a coupling end 72, which has a generally cylindrical shape complementary to the coupling opening 11. The diameter of the coupling end 72 is matched with that of the coupling opening 11. In use, the coupling end 72 may be connected to an ultrasonic generator. An internal structure of the coupling end 72 is not illustrated in the drawing. In the case that an ultrasonic generator is not required, the body 1 of the reactor should also be sealed with the lid 7.

The body 1 and the lid 7 may be formed by machining, such as drilling or milling, of a metallic material, or by die casting, forging, or stamping using a mold in combination with welding. Processes for forming the body 1 and the lid 7 include, but are not limited to, these techniques.

In actual practice, the present reactor can operate as a single unit to produce fine particles, or a plurality of the reactors can be connected in series such that the outlet opening 51 of one reactor is connected to the inlet openings 21 of the next one. Such arrangements depend on the actual requirements for the final particle size.

The reactor of the present disclosure can provide several advantages. It allows two fast liquid jets to be mixed with each other such that a swirl flow is generated. Since the swirl flow can result in intensive mixing and enhanced mass transfer from phase to phase, a rapid reaction can take place in the liquid without constraint by the mass transfer. In this way, high reaction efficiency is achieved. The reactor is small in size, but enables mass production of fine particles. Moreover, the reactor has a simple structure, can be manufactured at a low cost, and consumes less energy. Further, bolted connection between the lid 7 and the body 1 facilitates cleaning and maintenance. In particular, in use, a reactant solution mixture is fed into the reaction chamber 3 through the feed passages 2, and forms a "Rankine vortex-like" flow under the influence of the geometry of the reaction chamber 3. Such vortex flow can provide intensive macromixing and micromixing, and thus facilitate a rapid chemical reaction. In the case that the lid 7 is connected to an ultrasonic generator, strong uniform shear fields created by the vortex flow in the chamber can further increase turbulent intensity of the flow under the action of ultrasonic waves. Especially, ultrasonic cavitation can enhance the mass transfer from phase to phase at the micro level, effectively suppressing further growth of the product particles and allowing a large number of fine crystal nuclei to be generated. The gradually reduced diameter of the tapering chamber 4 enables the pressure within the chamber to be increased as the diameter of the chamber decreases. So, the force for driving the fluid can be increased, and the speed of the fluid at the inlet can be further increased. Products produced at this point are still under the control of the fluid field, enabling small and large particles to be aggregated and broken down, respectively, and providing a more uniform particle size distribution. Moreover, rotation of the fluid in the fluid field can lead to a locally increased turbulent kinetic energy and a locally increased shearing stress, generating a significant amount of turbulent eddies. The turbulent eddies having a size similar to the solid particles produce a strong shearing action on primary crystallites, which can facilitate passivation and stabilization of the solid surfaces. The reactor enables the reaction process, especially the precipitation process, to proceed more rapidly, so as to produce a fine powder material with regular topographies, smaller particle sizes, and a narrow particle size distribution.

Above several embodiments of the disclosure have been described. However, the present disclosure and embodiments are not limited to these. Any modifications made by those skilled in the art without departing from the concept of the disclosure shall fall within the scope of the disclosure as defined by the claims.

## Claims

1. A swirling vortex flow reactor assisted by ultrasound irradiation for producing fine particles, comprising a body, which is provided with:
a feed passage configured to supply a high-speed jet to a reaction chamber;
the reaction chamber configured to make the high-speed jet supplied from the feed passage to form a vortex and be used as a reaction site for producing particles;
a tapering chamber configured to aggregate and break particles; and
a discharge passage configured to discharge fine particles;
wherein, the feed passage, the reaction chamber, the tapering chamber, and the discharge passage are in sequential communication with each other;
and wherein, the reaction chamber and the tapering chamber each have a circular cross-section, and the axis of the reaction chamber coincides with the axis of the tapering chamber;
and wherein, the diameter of the tapering chamber is gradually reduced from its inlet end to its outlet end, and the reaction chamber has a diameter greater than or equal to the largest diameter of the tapering chamber;
and wherein, the direction in which the jet discharges from an outlet end of the feed passage is perpendicular to a plane within which the axis of the reaction chamber lies and tangent to an inner wall of the reaction chamber.

2. The reactor according to claim 1, wherein, there are provided two said feed passages arranged symmetrically with respect to a center of the reaction chamber.

3. The reactor according to claim 1, wherein, the reaction chamber has a height equal to the diameter of the feed passage.

4. The reactor according to claim 1, wherein, the feed passage is designed as a straight tube having an axis perpendicular to a plane within which the axis of the reaction chamber lies and tangent to a concentric circle which defines an inner wall of the reaction chamber; and wherein, the discharge passage is also designed as a straight tube, and the axis of the discharge passage coincides with the axes of the reaction chamber and of the tapering chamber; and wherein the discharge passage has a diameter larger than that of the outlet end of the tapering chamber.

5. The reactor according to claim 1, wherein, the reaction chamber is cylindrical in shape, and the tapering chamber is a revolving body with the generatrix being an arc-shaped curved line.

6. The reactor according to claim 1, wherein, the inlet end of the feed passage is provided with an inlet opening, and the outlet end of the discharge passage is provided with an outlet opening, wherein the inlet opening of the feed passage and the outlet opening of the discharge passage are threadably attached to respective circular tubular members with a reducer.

7. The reactor according to claim 1, further comprising an upper lid, configured to sealingly connect to the body of the reactor, wherein, an upper end surface of the body is provided with a coupling opening in communication with the reaction chamber, wherein edges of the coupling opening are provided with an inner sealing groove; and wherein, an outer sealing groove is provided in the upper end surface of the body outside the inner sealing groove; and wherein sealing rings are provided in the inner and outer sealing grooves.

8. The reactor according to claim 1, wherein, the upper lid is provided with positioning holes, and the body is provided with threaded holes corresponding to the positioning holes, and wherein, the upper lid is fixedly connected to the body by fastening bolts inserted through the positioning holes and the threaded holes.

9. The reactor according to claim 1, wherein, the side of the upper lid facing the reaction chamber is provided with a coupling end, the diameter of which is matched with that of the coupling opening of the body, wherein, the coupling end is connected to an ultrasonic generator in use.

10. The reactor according to claim 7, wherein, the upper lid is connected to the body by ultrasonic welding.
